# EUROPÄISCHE PATENTSCHRIFT

(11) **EP 1 047 489 B1**
(45) Veröffentlichungstag und Bekanntmachung des Hinweises auf die Patenterteilung: **11.09.2002**
(21) Anmeldenummer: 98951514.3
(22) Anmeldetag: 12.10.1998
(51) Int. Cl.: B01F 5/06, B01J 19/00

(54) **MIKROMISCHER**
MICROMIXER
MICROMELANGEUR

(30) Priorität: 22.10.1997 DE 19746583
(43) Veröffentlichungstag der Anmeldung: 02.11.2000
(73) Patentinhaber: MERCK PATENT GmbH, 64293 Darmstadt (DE)
(72) Erfinder: KOOP, Ulrich, D-64380 Ro dorf (DE); SCHMELZ, Michael, D-65830 Kriftel (DE); BEIRAU, Andreas, D-64291 Darmstadt (DE)
(86) Internationale Anmeldenummer: EP9806462
(87) Internationale Veröffentlichungsnummer: WO99020379

(56) Entgegenhaltungen:
- WO-A-96/03206
- DE-A- 19 511 603
- DE-A- 19 541 265
- DE-A- 19 746 581
- DE-C- 19 540 292

## Beschreibung

Die Erfindung betrifft einen Mikromischer zum Mischen von mindestens zwei flüssigen, viskosen oder gasförmigen Phasen, mit jeweils einem Zulaufkanal für jede der Phasen, einer Mischstrecke, in der die Phasenströme ein- oder mehrfach gekreuzt und geteilt werden, und einem Austrittskanal für das Gemisch.

Einrichtungen zum Mischen von flüssigen, viskosen oder gasförmigen Phasen sind in unterschiedlichen Ausführungsformen zum Beispiel aus WO-A-9603206 und gemäß dem einleitenden Teil des Anspruchs 1 bekannt. Das Funktionsprinzip dieser Mischer besteht darin, die beiden oder mehreren, miteinander zu mischenden Phasenströme mehrfach zu teilen und zu kreuzen, so daß am Ende der Mischstrecke ein intensiv durchmischter Stoffstrom entsteht. Zum Mischen kleiner Mengen ist es beispielsweise bekannt, die Mischstrecke in einem dünnen Rohr auszubilden, das Mischkörper enthält, die die beiden zu mischenden Phasen in einander kreuzenden Kanälen führen. Solche rohrförmigen Mischstrecken sind jedoch weniger geeignet, wenn besonders kleine Mengen gemischt werden müssen und beispielsweise eine exakte Temperaturkontrolle erforderlich ist.

Aufgabe der Erfindung ist es daher, einen Mikromischer der eingangs genannten Gattung so auszubilden, daß mit geringem Fertigungsaufwand eine Mischstrecke aufgebaut werden kann, die ein sehr geringes Aufnahmevolumen aufweist und in allen Bereichen eine exakte und gleichmäßige Temperaturführung ermöglicht. Außerdem soll der Mikromischer leicht zu reinigen sein und die Möglichkeit bieten, sehr unterschiedliche Materialien zu verwenden, damit eine Anpassung an sehr unterschiedliche Einsatzfälle ermöglicht wird.

Diese Aufgabe wird erfindungsgemäß durch die gekennzeichneten Merkmale des Anspruchs 1 gelöst.

Da die Mischstrecke ausschließlich aus den einander zugekehrten Oberflächen der Gehäuseteile und den darin ausgesparten Kanalnuten besteht, entfällt die Notwendigkeit, gesonderte Mischkörper vorzusehen. Die in mindestens einer der beiden Verbindungsoberflächen ausgesparten Kanalnuten können mit feinmechanischen Fertigungverfahren in jedem beliebigen, an den jeweiligen Anwendungsfall angepaßten Verlauf, Querschnittsgestaltung und Oberflächenstruktur ausgeführt werden. Da die Bearbeitung nur im unmittelbaren Oberflächenbereich erfolgt, ist der hierfür erforderliche Fertigungsaufwand verhältnismäßig gering.

Der einfache, im wesentlichen plattenförmige Aufbau der beiden Gehäuseteile und gegebenenfalls weiterer, dazwischen angeordneter Gehäusezwischenplatten, die jeweils beiderseits eine Verbindungsoberfläche aufweisen, ermöglicht die Verwendung sehr unterschiedlicher Materialien, wobei sich die Materialauswahl weitestgehend nur nach den Anforderungen der zu mischenden Stoffe richtet, da fertigungstechnische Überlegungen weitgehend in den Hintergrund treten.

Die Abdichtung zwischen den aufeinanderliegenden Verbindungsoberflächen erfolgt durch Druckkräfte, nämlich Zusammenpressen der feinbearbeiteten Oberflächen und/oder Dichtungen, beispielsweise O-Ring-Dichtungen oder Flachdichtungen. Nach dem Öffnen des Mikromischers können alle Bereiche, die mit den zu mischenden Stoffen in Berührung gekommen sind, in einfacher Weise gereinigt werden.

Da alle Bereiche der einander in der Mischstrecke kreuzenden Kanäle sowie etwaiger Anschlußnuten in gleichmäßiger Weise in der Verbindungsoberfläche ausgebildet sind, sind auch die Wärmeübertragungsverhältnisse in allen Kanalabschnitten völlig gleichmäßig. Deshalb kann allein durch die Temperierung der Gehäuseteile eine völlig gleichmäßige Temperaturführung in allen Kanalabschnitten des Mikromischers erreicht werden. Der sehr geringe Querschnitt der Kanalnuten führt dazu, daß das Verhältnis der Kanaloberflächen zu dem Kanalvolumen sehr groß ist, wodurch ein sehr guter Wärmeaustausch ermöglicht wird. Dies trägt auch zur Erhöhung der Funktionssicherheit bei und ermöglicht eine exakte Temperaturführung.

Vorzugsweise sind die Kanalnuten nur in einer der beiden aneinander liegenden Verbindungsoberflächen ausgespart. Stattdessen ist es aber auch möglich, Kanalnuten in beiden Verbindungsoberflächen auszusparen.

Gemäß einer bevorzugten Ausführungsform der Erfindung besteht die Mischstrecke aus zwei wellenförmig verlaufenden, einander mehrfach kreuzenden Kanalnuten. Dieser Nutverlauf ist fertigungstechnisch besonders einfach herzustellen und ergibt in allen Kanalbereichen einen weitgehend gleichen Kanalquerschnitt, so daß in allen Bereichen auch gleiche Wärmeübertragungsverhältnisse zu den Gehäuseteilen bestehen. Auf kleinstem Raum und mit verhältnismäßig geringer Kanallänge wird eine intensive Durchmischung erreicht.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
Fig. 1 in räumlicher, auseinandergezogener Darstellung einen aus einem Gehäuseunterteil und einem Gehäuseoberteil bestehenden Mikromischer, wobei die Verbindungsschrauben weggelassen sind,
Fig. 1a eine besondere Ausführungsform des Gehäuseunterteils, wobei die sich an die Zulaufkänäle 1a und 1b sich anschließenden Kanalnuten V-förmig aufeinander treffen, wobei die Spitze des Vs in die entgegengesetzte Richtung der wellenförmig verlaufenden Kanalnuten weist.
Fig. 2 in einer Darstellung entsprechend der Fig. 1 eine abgewandelte Ausführungsform eines Mikromischers.

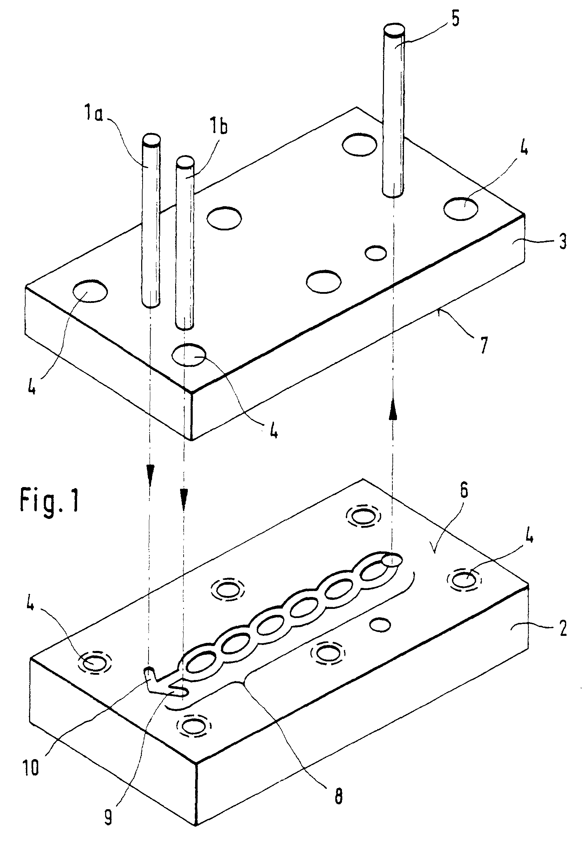

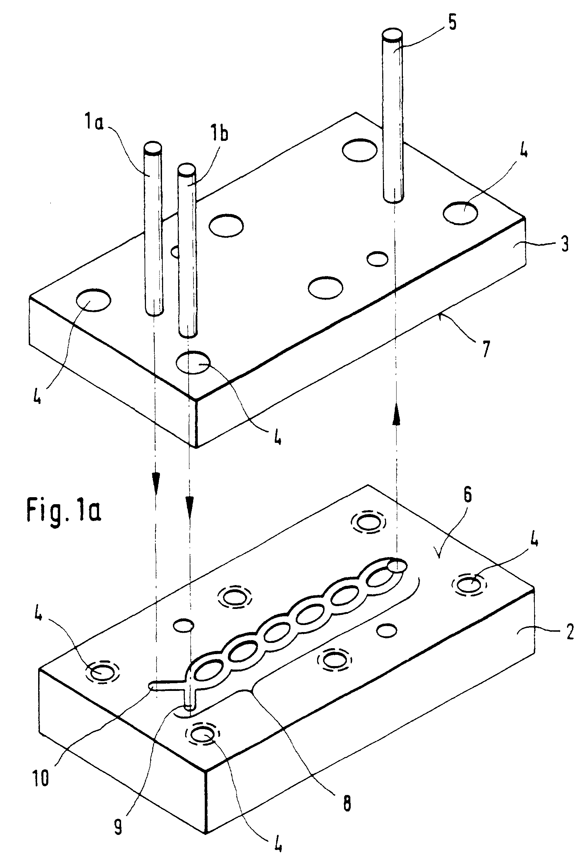

Der in den Figuren 1 und 1a gezeigten Mikromischer dienen zum Mischen von zwei flüssigen, viskosen oder gasförmigen Phasen, die über zwei nur schematisch angedeutete Zulaufkanäle 1a, 1b zugeführt werden. Der Mikromischer weist ein Gehäuseunterteil 2 und ein Gehäuseoberteil 3 auf, die bei den dargestellten Ausführungsbeispielen als einfache rechteckige Platten ausgeführt sind. Im zusammengebauten Zustand ist das Gehäuseunterteil mit dem Gehäuseoberteil durch (nicht dargestellte) Schrauben verbunden, die sich durch Bohrungen 4 erstrecken.

Ein die gemischte Phase abführender Austrittskanal 5 ist aus dem Mikromischer herausgeführt.

Das Gehäuseunterteil 2 und das Gehäuseoberteil 3 liegen im zusammengebauten Zustand an einander zugekehrten Verbindungsoberflächen 6 bzw. 7 dichtend aneinander. In der Verbindungsoberfläche 6 des Gehäuseunterteils ist eine Mischstrecke 8 zwischen den Zulaufkanälen 1a, 1b und dem Austrittskanal 5 ausgebildet. Die Mischstrecke 8 besteht aus zwei in der Verbindungsoberfläche 6 ausgesparten Kanalnuten 9 und 10, die wellenförmig verlaufen und aneinander zur Bildung der Mischstrecke 8 mehrfach kreuzen. Dadurch werden in den Ausführungsbeispielen nach Fig. 1 und Fig. 1a die beiden durch die Zulaufkanäle 1a, 1b zugeführten Phasenströme mehrfach gekreuzt und geteilt und dadurch intensiv miteinander vermischt. In besonderen Ausführungsformen können die in den Gehäuseunterteilen 2 gezeigten Kanalnuten im Anschluß an die Zulaufkanäle 1a und 1b Y-, T- oder V-förmig, wobei die Spitze des Vs in die entgegengesetzte Richtung der wellenförmig verlaufenden Kanalnuten weist. Eine dieser besonderen Ausführungsformen ist in Fig. 1a gezeigt.

Die beiden Zulaufkanäle 1a, 1b münden jeweils an einem Ende der beiden wellenförmigen Kanalnuten 9 bzw. 10.

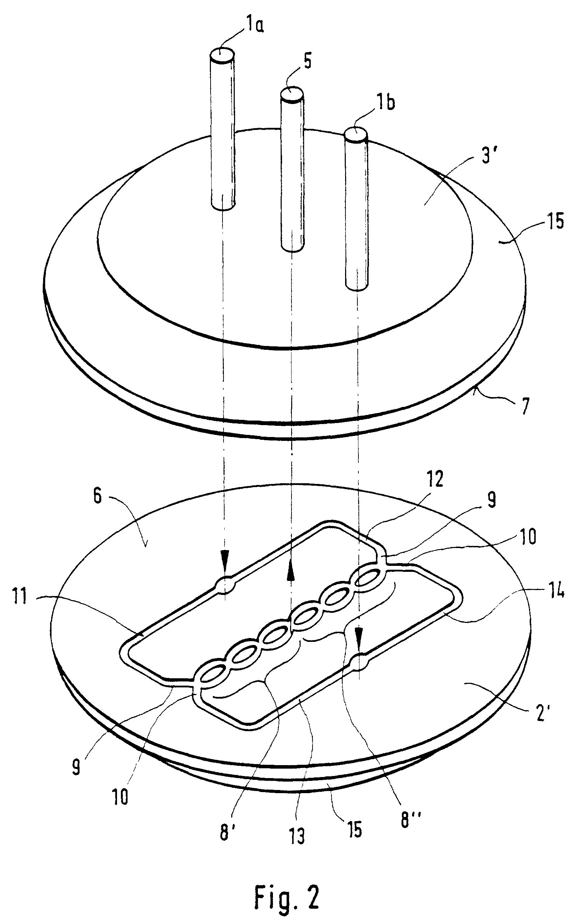

Das Ausführungsbeispiel nach Fig. 2 unterscheidet sich von dem Ausführungsbeispiel nach Fig. 1 im wesentlichen dadurch, daß die beiden Zulaufkanäle 1a, 1b über Anschlußnuten 11,12 bzw. 13,14 jeweils mit beiden Enden einer der wellenförmigen Kanalnuten 9 bzw. 10 verbunden sind, die die Mischstrecke bilden. Der Austrittskanal 5 ist in einem mittleren Bereich der einander kreuzenden Kanalnuten 9,10 angeschlossen. Dadurch entstehen hierbei zwei parallelgeschaltete Mischstrecken 8' bzw. 8".

Beim Ausführungsbeispiel nach Fig. 2 sind das Gehäuseunterteil 2' und das Gehäuseoberteil 3' kreisscheibenförmig ausgeführt und an ihrem äußeren Rand mit einer Fase 15 versehen, die es ermöglicht, die beiden Gehäuseteile 2' und 3' durch ein am Rand angreifendes Flanschverbindungselement miteinander zu verbinden, beispielsweise einen Spannring.

Der Aufbau der beiden beispielsweise dargestellten Mikromischer kann noch dadurch erweitert werden, daß zwischen dem Gehäuseunterteil 2 bzw. 2' und dem Gehäuseoberteil 3 bzw. 3' eine oder mehrere Gehäusezwischenplatten angeordnet werden, die beiderseits eine Verbindungsoberfläche aufweisen. Dadurch ist es möglich, einen mehrstufigen Mischer aufzubauen.

Zusätzlich zu den beschriebenen Mischstrecken 8, 8' bzw. 8" können durch Aussparungen in den Verbindungsoberflächen 6,7 und gegebenenfalls den Verbindungsoberflächen von Gehäusezwischenplatten Wärmetauscher, Pumpen und/oder andere verfahrenstechnische Komponenten ausgebildet werden. Durch weitere Platten und/oder andere Kanalformen lassen sich neben Wärmetauschern und Pumpen auch exakt temperierte Verweil- und Vorkühlstrecken integrieren.

Bei den dargestellten Auführungsbeispielen bestehen die Gehäuseteile aus Metall. Stattdessen ist es auch möglich, andere Materialien zu verwenden, beispielsweise Glas, Kunststoff oder Keramik. Es ist auch möglich, eine Oberflächenbeschichtung, beispielsweise durch Bedampfen, vorzusehen, so daß die mit den zu mischenden Phasen in Berührung kommenden Oberflächen in der jeweils erforderlichen Materialbeschaffenheit ausgewählt werden können.

## Patentansprüche

1. Mikromischer zum Mischen von mindestens zwei flüssigen, viskosen oder gasförmigen Phasen, mit jeweils einem Zulaufkanal für jede der Phasen, einer Mischstrecke, in der die Phasenströme einoder mehrfach gekreuzt und geteilt werden, und einem Austrittskanal für das Gemisch,
**dadurch gekennzeichnet, daß**
a) ein Gehäuseunterteil (2,2') und ein Gehäuseoberteil (3,3') an einander zugekehrten Verbindungsoberflächen (6,7) dichtend aneinander liegen und durch Druckkraft, z. B. Schrauben oder Flanschverbindungselemente, miteinander verbunden sind,
b) die Zulaufkanäle (1a, 1b) und der Austrittskanal (5) in die durch die Verbindungsoberflächen (6,7) gebildete Trennfläche münden, und
c) in mindestens einer der beiden Verbindungsoberflächen (6) die Mischstrecke (8,8',8") bildende Kanalnuten (9,10) ausgespart sind.

2. Mikromischer nach Anspruch 1, **dadurch gekennzeichnet, daß** die Kanalnuten (9,10) nur in einer der beiden aneinanderliegenden Verbindungsoberflächen (6) ausgespart sind.

3. Mikromischer nach Anspruch 1, **dadurch gekennzeichnet, daß** die Mischstrecke (8,8',8") aus zwei wellenförmig verlaufenden, einander mehrfach kreuzenden Kanalnuten (9,10) besteht, an deren einem Ende die beiden Zulaufkanäle (1a, 1b) münden und an deren anderen Ende der Austrittskanal (5) angeschlossen ist.

4. Mikromischer nach Anspruch 1, **dadurch gekennzeichnet, daß** die Mischstrecke (8,8',8") aus zwei wellenförmig verlaufenden, einander mehrfach kreuzenden Kanalnuten (9,10) besteht, wobei zwei Zulaufkanäle (1a, 1b) über Anschlußnuten (11,12,13,14) jeweils mit beiden Enden einer der wellenförmigen Kanalnuten (9 bzw. 10) verbunden sind und der Austrittskanal (5) in einem mittleren Bereich der einander kreuzenden Kanalnuten (9,10) angeschlossen ist.

5. Mikromischer nach Anspruch 1, **dadurch gekennzeichnet, daß** zwischen dem Gehäuseoberteil (3,3') und dem Gehäuseunterteil (2,2') mindestens eine Gehäusezwischenplatte angeordnet ist, die beiderseits eine Verbindungsoberfläche aufweist.

6. Mikromischer nach Anspruch 1, **dadurch gekennzeichnet, daß** zusätzlich zu der Mischstrecke (8,8',8") Wärmetauscher, Pumpen und/oder andere verfahrenstechnische Komponenten durch Aussparungen in den Verbindungsoberflächen (6 bzw. 7) ausgebildet sind.

7. Mikromischer nach Anspruch 1, **dadurch gekennzeichnet, daß** das Gehäuseoberteil (3') und das Gehäuseunterteil (2') durch ein am Rand angreifendes Flanschverbindungselement miteinander verbunden sind.

## Claims

1. Micromixer for mixing at least two liquid, viscous or gaseous phases, having one inlet passage for each of the phases, a mixing section, in which the phase flows are crossed and divided one or more times, and an outlet passage for the mixture,
**characterized in that**
a) a housing bottom part (2, 2') and a housing top part (3, 3') bear against one another in a sealed manner on connecting surfaces (6, 7) which face towards one another and are connected to one another by compressive force, for example screws or flanged connecting elements,
b) the inlet passages (1a, 1b) and the outlet passage (5) open out into the parting face formed by the connecting surfaces (6, 7), and
c) passage grooves (9, 10), which form the mixing section (8, 8', 8"), are recessed in at least one of the two connecting surfaces (6).

2. Micromixer according to Claim 1, **characterized in that** the passage grooves (9, 10) are recessed in only one of the two connecting surfaces (6) which bear against one another.

3. Micromixer according to Claim 1, **characterized in that** the mixing section (8, 8', 8") comprises two passage grooves (9, 10) which run in the shape of a wave, cross one another a number of times and at one end of which the two inlet passages (1a, 1b) open out and to the other end of which the outlet passage (5) is connected.

4. Micromixer according to Claim 1, **characterized in that** the mixing section (8, 8', 8") comprises two passage grooves (9, 10) which run in the shape of a wave and cross one another a number of times, two inlet passages (1a, 1b) each being connected to both ends of one of the wavy passage grooves (9 or 10) via connecting grooves (11, 12, 13, 14), and the outlet passage (5) being connected in a central area of the passage grooves (9, 10) which cross one another.

5. Micromixer according to Claim 1, **characterized in that** at least one intermediate housing plate, which has a connecting surface on both sides, is arranged between the housing top part (3, 3') and the housing bottom part (2, 2').

6. Micromixer according to Claim 1, **characterized in that**, in addition to the mixing section (8, 8', 8''), heat exchangers, pumps and/or other process engineering components are formed by recesses in the connecting surfaces (6 or 7).

7. Micromixer according to Claim 1, **characterized in that** the housing top part (3') and the housing bottom part (2') are connected to one another by means of a flanged connecting element which acts on the edge.

## Revendications

1. Micromélangeur, pour le mélange d'au moins deux phases liquides, visqueuses ou gazeuses, avec respectivement un canal d'admission pour chacune des phases, une veine de mélange dans laquelle les écoulements de phases sont croisés et divisés à une ou plusieurs reprise(s), et un canal de sortie pour le mélange
**caractérisé en ce qu'**
a) une partie inférieure de boîtier (2,2') et une partie supérieure de boîtier (3,3') sont placées en appui étanche l'une sur l'autre au niveau de surfaces de liaison (6,7) tournées l'une vers l'autre, et sont reliées ensemble avec application une force de pressage, par exemple venant d'un vissage ou d'éléments de liaison à bride, et
b) les canaux d'admission (1a,1b) et le canal de sortie (5) débouchent dans la surface de séparation formée par les surfaces de liaison (6,7), et
c) des gorges formant canal (9,10) formant la veine de mélange (8,8',8") sont ménagées dans au moins l'une des deux surfaces de liaison (6).

2. Micromélangeur selon la revendication 1, **caractérisé en ce que** les gorges formant canal (9,10) ne sont creusées que dans l'une des deux surfaces de liaison (6) en appui l'une sur l'autre.

3. Micromélangeur selon la revendication 1, **caractérisé en ce que** la veine de mélange (8,8',8") est formée de deux gorges formant canal (9,10) se croisant l'une l'autre à plusieurs reprises, ayant une allure ondulée, gorges formant canal à une extrémité de laquelle débouchent les deux canaux d'amenée (1a,1b) et à l'autre extrémité desquelles est raccordé le canal de sortie (5).

4. Micromélangeur selon la revendication 1, **caractérisé en ce que** la veine de mélange (8, 8', 8") est formée de deux gorges formant canal (9,10) se croisant l'une l'autre à plusieurs reprise, à allure ondulée, deux canaux d'admission (1a,1b) étant reliés par des gorges de raccordement (11, 12, 13, 14), chaque fois aux deux extrémités d'une des gorges formant canal (9 ou 10) à forme ondulée, et le canal de sortie (5) étant raccordé dans une zone médiane des gorges formant canal (9,10) se croisant l'une l'autre.

5. Micromélangeur selon la revendication 1, **caractérisé en ce qu'**entre la partie supérieure de boîtier (3,3') et la partie inférieure de boîtier (2,2') est disposée au moins une plaque intermédiaire de boîtier, présentant de part et d'autre une surface de liaison.

6. Micromélangeur selon la revendication 1, **caractérisé en ce qu'**en plus de la veine de mélange (8,8',8"), des échangeurs de chaleur, des pompes et/ou d'autres composants concernant la technique des procédés sont formés par des épargnes dans les surfaces de liaison (6 ou 7).

7. Micromélangeur selon la revendication 1, **caractérisé en ce que** la partie supérieure de boîtier (3') et la partie inférieure de boîtier (2') sont reliées ensemble par un élément de liaison par bride, agissant sur le bord.
